(19) Europäisches Patentamt
European Patent Office
Office européen des brevets

(11) **EP 1 390 952 B1**

(12) **FASCICULE DE BREVET EUROPEEN**

(45) Date de publication et mention
de la délivrance du brevet:
**30.07.2008 Bulletin 2008/31**

(51) Int Cl.:
***G21C 19/307*** (2006.01)    ***B01J 47/08*** (2006.01)
***C02F 1/469*** (2006.01)

(21) Numéro de dépôt: **02738270.4**

(22) Date de dépôt: **17.05.2002**

(86) Numéro de dépôt international:
**PCT/FR2002/001681**

(87) Numéro de publication internationale:
**WO 2002/093587 (21.11.2002 Gazette 2002/47)**

(54) **PROCEDE DE REGULATION DE LA CONCENTRATION D'IONS METALLIQUES PAR ELECTROSORPTION REVERSIBLE SUR CARBONE ACTIVE, CARTOUCHE CYLINDRIQUE POUR LE PIEGEAGE D'IONS METALLIQUES ET SON UTILISATION DANS UNE CENTRALE NUCLEAIRE**

VERFAHREN ZUM REGULIEREN DER KONZENTRATION VON METALLIONEN DURCH REVERSIBLE ELEKTROSORPTION AUF AKTIVKOHLE, ZYLINDRISCHE KARTUSCHE ZUM EINFANGEN VON METALLIONEN UND IHRE VERWENDUNG IN EINEM KERNKRAFTWERK

METHOD FOR REGULATING METAL ION CONCENTRATION BY REVERSIBLE ACTIVATED CARBON ELECTROABSORPTION, CYLINDRICAL CARTRIDGE FOR TRAPPING METAL IONS AND USE THEREOF IN A NUCLEAR PLANT

(84) Etats contractants désignés:
**AT BE CH CY DE DK ES FI FR GB GR IE IT LI LU MC NL PT SE TR**

(30) Priorité: **17.05.2001 FR 0106510**

(43) Date de publication de la demande:
**25.02.2004 Bulletin 2004/09**

(73) Titulaires:
• **CENTRE NATIONAL DE
LA RECHERCHE SCIENTIFIQUE (CNRS)
75016 Paris (FR)**
• **Electricité de France
75008 Paris (FR)**

(72) Inventeurs:
• **ALFARRA, Ahmad
F-45100 Orleans (FR)**
• **BEGUIN, François
F-45100 Orleans (FR)**
• **FRACKOWIAK, Elzbieta, Zofia
F-45100 Orleans (FR)**

(74) Mandataire: **Ahner, Francis et al
Cabinet Régimbeau
20, rue de Chazelles
75847 Paris cedex 17 (FR)**

(56) Documents cités:
**EP-A- 0 872 278        GB-A- 2 081 744
GB-A- 2 187 761        US-A- 5 547 581**

• **SERON A ET AL: "Sorption and desorption of lithium ions from activated carbons" CARBON, ELSEVIER SCIENCE PUBLISHING, NEW YORK, NY, US, vol. 34, no. 4, 1996, pages 481-487, XP004022332 ISSN: 0008-6223**
• **FRACKOWIAK E: "Electrochemical polarization of activated carbons for the reversible sorption of lithium ions" FUEL, IPC SCIENCE AND TECHNOLOGY PRESS, GUILDFORD, GB, vol. 77, no. 6, mai 1998 (1998-05), pages 571-575, XP004285850 ISSN: 0016-2361**

**Description**

La présente invention concerne le domaine technique général du piégeage d'ions en solution.

En particulier, la présente invention concerne une cartouche cylindrique pour le piégeage d'ions métalliques en solution aqueuse comprenant une électrode en tissu de carbone activé. L'invention a également pour objet un procédé de régulation de la concentration d'ions métalliques dans un circuit d'eau par électrosorption sur carbone activé ainsi que l'utilisation d'une cartouche cylindrique comprenant une électrode en tissu de carbone activé pour la régulation de la concentration d'ions lithium dans le fluide primaire d'une centrale nucléaire par électrosorption sur carbone activé.

Actuellement, les résines échangeuses d'ions sont le principal outil de piégeage des ions métalliques en solution. Elles présentent néanmoins plusieurs inconvénients. Afin de régénérer ces résines, il est ainsi nécessaire de stopper le système dans lequel la résine est positionnée et d'utiliser des réactifs particuliers tels qu'une solution à forte concentration de métal alcalin ou d'acide fort afin de déplacer l'équilibre chimique vers la désorption des ions. En outre, dans le cas particulier des centrales nucléaires, les résines utilisées pour piéger les ions lithium ne sont pas régénérables.

En effet, dans le domaine nucléaire, l'un des moyens de contrôler le fonctionnement d'un réacteur nucléaire à eau pressurisée (R.E.P) consiste à injecter des quantités variables de bore sous forme d'acide borique dans le fluide primaire. Dans un tel milieu de pH légèrement acide, la corrosion des métaux des canalisations est activée sous le flux neutronique. Pour éviter une telle corrosion, le pH est ramené à une valeur voisine de 7,2 par ajout d'hydroxyde de lithium enrichi en isotope 7 du lithium, $^7$LiOH. La concentration du lithium est ainsi coordonnée à celle de l'acide borique.

En cas de manque de LiOH, la quantité nécessaire peut facilement être injectée dans le circuit. Mais en cas d'excès de LiOH, des résines sont utilisées pour piéger les ions lithium et le $^7$Li est ainsi définitivement perdu. Cette méthode actuelle de gestion de la teneur en $^7$Li est très consommatrice de $^7$LiOH et représente un coût élevé.

Or, il a été découvert, de manière surprenante selon l'invention, qu'il était possible de réguler la concentration du lithium en faisant passer le fluide primaire d'une centrale électrique sur un filtre comprenant un tissu de carbone activé soumis à une polarisation contrôlée.

Les tissus de carbones activés sont des matériaux de bonne inertie chimique que l'on sait produire industriellement à un coût raisonnable. Leur intérêt majeur, par rapport à d'autres matériaux, réside dans l'existence simultanée d'une fonctionnalité de surface, de micropores et de mésopores et d'une bonne conductivité électrique. Ils sont ainsi souvent utilisés pour la dépollution des eaux potables et la purification de l'air, ainsi que pour l'élimination des polluants organiques en solution aqueuse.

Les carbones activés peuvent piéger irréversiblement des traces de métaux lourds tels que le plomb, le mercure ou le cadmium (Ferro-Garcia M. A. et coll., Carbon, 1990, 28, 545 ; Jayson G. G. et coll., Carbon, 1987, 25, 523 ; Dobrowolski R et coll., Carbon, 1986, 24, 15), des métaux de transition tels que le cuivre, le zinc, le chrome ou le cobalt (Arsala Kahn M. et coll., Carbon, 1992, 30, 957; Lalvani S. B. et coll., Carbon, 1998, 36, 1219; Carrott P. J. M. et coll., Carbon, 1997, 35, 403; Rivera-Utrilla J. et coll., Carbon, 1987, 25, 645; Lakov L. et coll., Carbon, 1999, 37, 1657) ainsi que des composés organiques (Haghseresht F. et coll., Carbon, 1999, 37, 1491).

G. G. Jayson et coll. (référence ci-dessus) ont montré que le phénomène d'adsorption du mercure (II) par un filtre en tissu de carbone activé pouvait être renforcé en appliquant une polarisation négative au tissu. S. Evans et coll. (J. Electrochem. Soc., 1966, 113, 1314) ont montré que le phénomène d'adsorption d'ions sur carbone pouvait être renforcé en appliquant une polarisation négative et qu'une polarisation positive permettait de produire la désorption. Ainsi, le phénomène réversible d'adsorption et de désorption d'ions d'une solution aqueuse sur carbone activé a déjà été décrit en phase statique, mais il n'avait encore jamais été envisagé jusqu'à présent en phase dynamique, avec un flux de solution. Il existait ainsi un besoin, notamment dans le domaine nucléaire, de mettre au point une cartouche comprenant un tissu de carbone activé permettant le piégeage réversible par adsorption/désorption d'ions métalliques dans un flux de solution ainsi qu'un procédé de régulation de la concentration de ces ions dans un circuit d'eau par électrosorption sur carbone activé.

La présente invention vient combler ce besoin. Les Demanderesses ont ainsi découvert une nouvelle configuration de cartouche comprenant un tissu de carbone activé permettant de réaliser l'adsorption/désorption d'ions métalliques présents dans un flux de solution aqueuse de manière contrôlée et efficace.

Ainsi, en faisant passer le fluide primaire d'une centrale électrique sur une cartouche comprenant un tissu en carbone activé soumis à une polarisation contrôlée selon la présente invention, il est alors possible de restituer au fluide les ions lithium piégés sans avoir besoin de réactifs particuliers, et sans stopper le système dans lequel le piège est positionné. Lorsque la concentration en ions lithium est trop forte, le lithium peut être piégé par application d'une polarisation négative au tissu de la cartouche et lorsque sa concentration est trop faible, le lithium peut être relâché dans le fluide en appliquant une polarisation positive. L'opération est réversible à tout moment et il est possible d'ajuster précisément la quantité d'ions libérés dans le fluide en contrôlant la différence de potentiel ou le courant électrique appliqué. Le fait de pouvoir contrôler la polarisation permet de coordonner la concentration en lithium à celle de l'acide borique, et donc de pouvoir s'adapter aux aléas de la consommation en électricité ou à l'état d'avancement de la réaction nucléaire.

En outre, la cartouche selon la présente invention est parfaitement adaptée pour traiter des volumes importants de solutions aqueuses, en piégeant les ions métalliques présents en solution.

Ainsi, une telle cartouche peut-elle être utilisée dans le domaine nucléaire, mais également dans divers domaines tels que le piégeage des métaux de transition ou des métaux lourds dans le domaine de l'environnement.

La présente invention a ainsi pour objet une cartouche cylindrique (1) pour le piégeage d'ions métalliques en solution aqueuse comprenant une électrode en tissu de carbone activé (2) fixée à au moins un collecteur de courant (3), une contre-électrode (4), une entrée et une sortie de la solution aqueuse à traiter, caractérisée en ce que le tissu (2) est disposé de telle manière que la solution se déplace tangentiellement à la surface du tissu sans le traverser pour assurer le piégeage des ions métalliques.

Les tissus de carbone activé selon la présente invention sont disponibles commercialement. En France, ils sont commercialisés par la société Actitex.

Le flux de solution aqueuse à traiter selon la présente invention peut être laminaire ou turbulent. Avantageusement selon la présente invention, le flux de solution aqueuse est laminaire.

Suivant la taille de la cartouche, le nombre de collecteurs de courant fixés au tissu de carbone activé peut varier, mais il est avantageux que les collecteurs ne couvrent pas plus de 15 à 20% de la surface externe du tissu afin que le tissu garde suffisamment de contact avec la solution.

Le dimensionnement de la cartouche selon la présente invention, c'est à dire la détermination de la masse de carbone à utiliser, est réalisé en fonction de la quantité d'ions à piéger, et par conséquent en fonction de la concentration des ions en solution.

Les collecteurs de courant et la contre-électrode sont en matériau conducteur et inerte électrochimiquement en présence de la solution. Les métaux nobles tels que le platine ou l'or répondent à ces critères, mais pour des questions de coût, le graphite est le matériau le plus adapté.

Divers objets et avantages de la présente invention deviendront apparents pour l'homme du métier par le biais de références aux dessins illustratifs suivants :

la figure 1 est une représentation schématique d'une cartouche (1') de l'art antérieur comprenant une électrode de travail en tissu de carbone activé (2') fixée à au moins un collecteur de courant (3') et une contre-électrode (4'), dans laquelle une solution aqueuse traverse le tissu.

la figure 2 est une représentation schématique d'une cartouche cylindrique (1) comprenant une électrode de travail cylindrique en tissu de carbone activé (2) fixée à au moins un collecteur de courant (3) et une contre-électrode cylindrique (4), dans laquelle une solution aqueuse passe de chaque côté du tissu sans le traverser.

la figure 3 est une représentation schématique d'un circuit d'électrosorption d'ions métalliques sur carbone activé.

la figure 4 est une représentation de l'évolution de la concentration des ions lithium en fonction du temps lors d'un cycle d'adsorption/désorption électrochimique en mode dynamique des ions lithium d'une solution aqueuse sur un tissu de carbone activé.

la figure 5 est une représentation de la variation de la conductivité électrique d'une solution aqueuse en fonction du temps lors de l'adsorption/désorption électrochimique en mode dynamique des ions lithium de la solution sur un tissu de carbone activé.

la figure 6 est une représentation de la variation du pH d'une solution aqueuse en fonction du temps lors de l'adsorption/désorption électrochimique en mode dynamique des ions lithium de la solution sur un tissu de carbone activé.

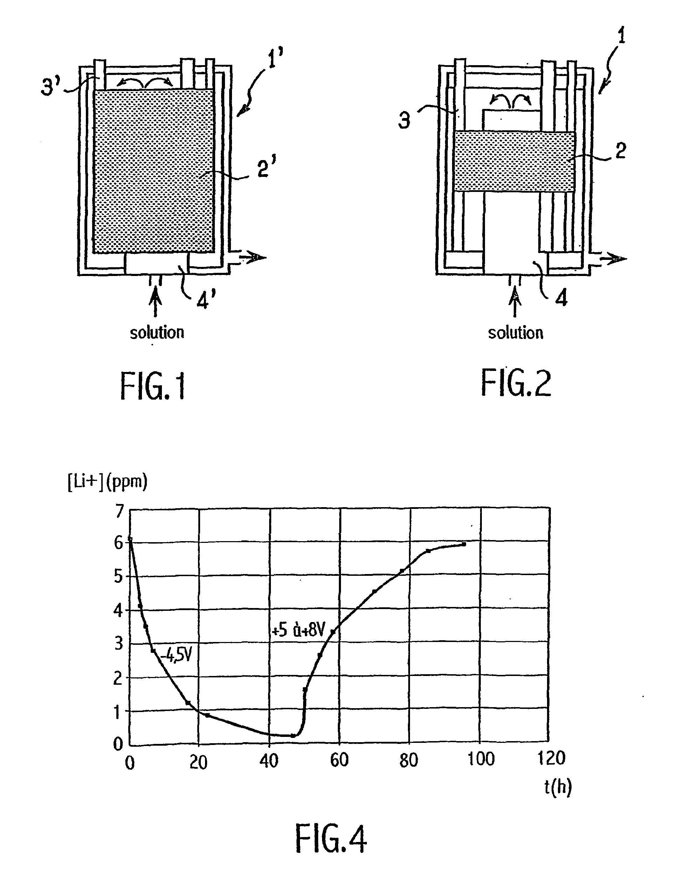

L'originalité de la cartouche selon la présente invention (Figure 2) vient du fait que la solution ne traverse pas le tissu de carbone activé comme cela est le cas pour un filtre classique (Figure 1). Ainsi, les Demanderesses ont démontré que lorsque le tissu de carbone activé était totalement traversé par la solution aqueuse, l'adsorption et la désorption des ions métalliques n'était que partielle sous l'effet d'une polarisation négative ou positive.

Ceci s'explique facilement à la lumière du mécanisme présenté ci-dessous, en prenant pour exemple l'adsorption/désorption du lithium.

Lorsqu'une polarisation négative est appliquée à une électrode constituée de carbone activé, l'eau est réduite et il y a formation d'hydrogène et d'ions hydroxyles à la surface du carbone :

$$H_2O + e^- \rightarrow \frac{1}{2}H_2 + OH^-$$

En raison de la texture microporeuse du carbone activé, les ions $OH^-$ ne diffusent que très lentement vers la solution, si bien que le pH augmente localement. Il y a alors dissociation des groupes acides en surface du substrat carboné (C*) dans l'ordre de leur acidité décroissante :

$$C*\text{-COOH} + OH^- \rightarrow C*\text{-COO}^- + H_2O$$

Les ions lithium viennent alors occuper la place des $H^+$ libérés et les ions lithium sont ainsi adsorbés :

$$C*\text{-COO}^- + Li^+ \rightarrow C*\text{-COO}^-Li^+$$

Plus la polarisation négative appliquée au carbone est élevée en valeur absolue, plus l'eau est électrolysée et plus le changement local de pH devient marqué. Les groupes de surface sont alors d'autant plus dissociés et le lithium est davantage adsorbé.

En présence d'une polarisation positive, c'est le phénomène inverse qui a lieu. L'oxydation de l'eau produit de l'oxygène et des ions $H^+$ qui font baisser localement le pH:

$$H_2O \rightarrow 2H^+ + \frac{1}{2}O_2 + 2e^-$$

et les ions lithium adsorbés sont alors libérés :

$$C*\text{-COO}^-Li^+ + H^+ \rightarrow C*\text{-COOH} + Li^+$$

L'adsorption/désorption est donc basée sur un changement de pH local en surface du carbone provoqué par l'électrolyse de l'eau (formation d'une couche de diffusion stable en surface du tissu à un pH localement modifié). Ce changement de pH permet la dissociation réversible des groupes de surface et ainsi l'adsorption/désorption des ions lithium.

Si la solution circule au travers du tissu, une part importante des ions $OH^-$ ou $H^+$ créés par électrolyse de l'eau sont drainés par le flux et ne restent pas à la surface du carbone activé. Le pH n'est donc pas suffisamment modifié pour que les groupes carboxyliques soient totalement dissociés ou protonés.

Afin d'obtenir une électrosorption satisfaisante d'ions d'une solution aqueuse sur carbone activé en phase dynamique, le tissu a été disposé de telle manière que la solution se déplace tangentiellement à la surface du tissu sans le traverser.

Dans un mode de réalisation particulier de la présente invention, la contre-électrode (4) est constituée d'un cylindre creux à l'intérieur duquel passe une solution aqueuse (Figure 2).

Avantageusement selon la présente invention, le tissu de carbone activé (2) et la contre-électrode (4) sont cylindriques et concentriques (Figure 2).

Avantageusement selon la présente invention, le tissu de carbone activé (2) occupe une partie de la surface du cylindre, de telle manière qu'une faible partie de la surface soit disponible afin que la solution puisse passer de chaque côté du tissu de carbone activé. La solution a ainsi plutôt tendance à balayer la surface du tissu sans vraiment le traverser. Plus le débit de la solution est faible, plus la couche de diffusion a un pH différent de celui de la solution, et plus l'adsorption puis la désorption sont efficaces.

Dans un exemple de réalisation particulier de la présente invention, le tissu (2) occupe environ un tiers de la surface du cylindre.

La présente invention a également pour objet un procédé de régulation de la concentration d'ions métalliques, en particulier d'élimination de traces de métaux lourds, dans un circuit d'eau par électrosorption sur carbone activé, caractérisé en ce qu'on fait circuler le fluide tangentiellement à la surface d'un filtre comprenant un tissu de carbone activé soumis à une polarisation contrôlée.

Ce procédé de régulation de concentration peut fonctionner réversiblement pour la majorité des ions métalliques, à l'exception des métaux nobles tels que le platine et l'or. Le piégeage des métaux lourds en solution présente un intérêt particulier de par leur toxicité.

Par le terme de "métaux lourds", on entend au sens de la présente invention les métaux de masse atomique supérieure à 178 uma.

Par le terme de "métaux nobles", on entend au sens de la présente invention les métaux qui ne peuvent pas être oxydés électrochimiquement en solution aqueuse.

Dans un mode de réalisation particulier de la présente invention, on diminue la concentration de cations métalliques de la solution aqueuse en polarisant négativement le tissu de carbone activé.

Dans un autre mode de réalisation particulier de la présente invention, on augmente la concentration de cations métalliques de la solution aqueuse en polarisant positivement le tissu de carbone activé.

Selon la présente invention, les ions métalliques sont avantageusement choisis dans le groupe constitué par les alcalins, les alcalino-terreux, les métaux de transition, les lanthanides, les actinides et les métaux lourds.

Par le terme d'"'alcalins", on entend au sens de la présente invention le lithium, le sodium, le potassium, le rubidium, le césium et le francium.

Par le terme d'"'alcalino-terreux", on entend au sens de la présente invention le béryllium, le magnésium, le calcium, le strontium, le baryum, et le radium.

Par le terme de "métaux de transition", on entend au sens de la présente invention les éléments situés au milieu de la classification périodique, dont le niveau atomique ns est rempli alors que la couche (n-1)d est incomplète.

De façon encore plus avantageuse selon la présente invention, l'ion métallique est le lithium.

Le procédé de régulation de concentration selon la présente invention fonctionne également réversiblement pour le plomb ou l'aluminium.

La concentration des anions métalliques, tels que les chromates, peut également être régulée par le procédé selon la présente invention. On diminue la concentration des anions métalliques en solution aqueuse en polarisant positivement le tissu de carbone activé et on augmente la concentration des anions métalliques en solution aqueuse en polarisant négativement le tissu de carbone activé.

Dans un autre mode de réalisation particulier de la présente invention, le filtre comprenant un tissu de carbone activé est constitué par la cartouche (1) pour le piégeage d'ions métalliques selon la présente invention.

Avantageusement selon la présente invention, le tissu de carbone activé est activé physiquement ou chimiquement, traité à l'aide d'un oxydant, puis lavé afin d'éliminer les traces d'oxydant dans le tissu. De manière encore plus avantageuse selon la présente invention, le tissu de carbone activé est activé physiquement.

Les tissus de carbone activé de la présente invention sont préparés à partir d'un précurseur cellulosique. Les précurseurs cellulosiques selon la présente invention sont constitués par des fibres de viscose et sont disponibles commercialement. Par activation physique, on entend au sens de la présente invention une pyrolyse du précurseur cellulosique sous atmosphère neutre à haute température, dans une plage allant d'environ 900°C jusqu'à environ 1200°C, de préférence à 900°C, puis une activation du précurseur à haute température, dans une plage allant d'environ 900°C jusqu'à environ 1200°C, de préférence à 900°C, sous un courant de dioxyde de carbone ou sous un courant de vapeur d'eau.

Le tissu de carbone activé de la présente invention peut notamment être lavé à l'extracteur de Soxhlet. Un lavage dans des conditions industrielles est également envisageable, mais généralement l'excès d'oxydant n'est pas alors totalement éliminé.

L'oxydant vient enrichir le carbone en groupes de surface sans pour autant détériorer ses qualités mécaniques et électriques. L'oxydant peut par exemple être de l'acide nitrique concentré.

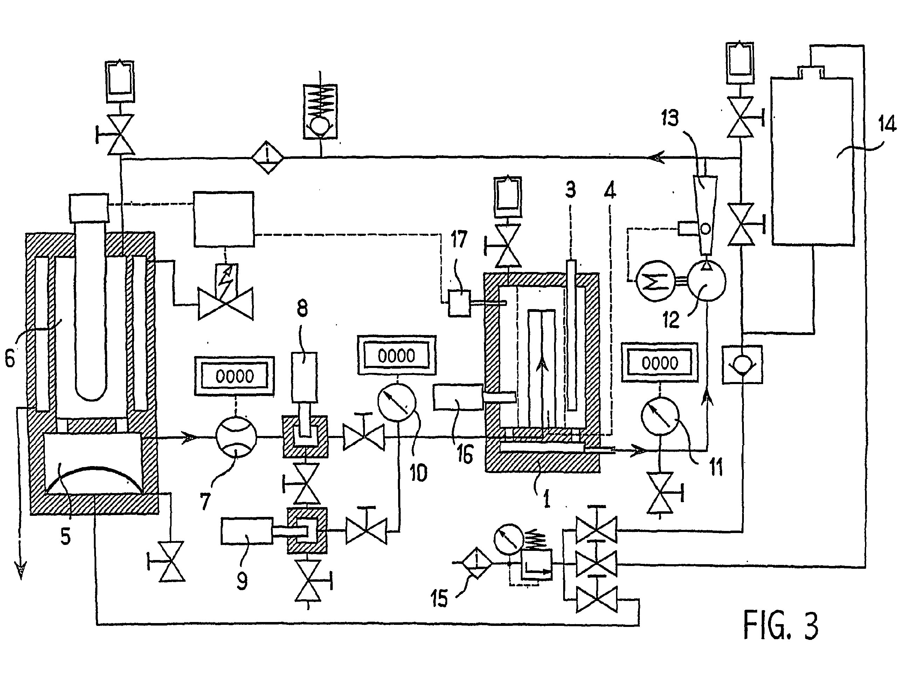

De façon encore plus avantageuse selon la présente invention, le tissu de carbone est activé physiquement, traité à l'acide nitrique concentré, puis lavé sous polarisation anodique pendant au moins 5 jours dans un circuit d'électrosorption d'ions métalliques sur carbone activé, ledit circuit étant un circuit fermé et comprenant une cartouche selon la présente invention (Figure 3). De manière encore plus avantageuse selon la présente invention, le tissu de carbone activé est traité à l'acide nitrique concentré pendant une durée comprise entre deux et quatre heures à une température d'au moins 80°C, mais la température de traitement peut varier de 25°C à 135°C et la durée de traitement de quelques heures à plusieurs dizaines d'heures en fonction de la température utilisée.

Le circuit d'électrosorption d'ions métalliques sur carbone activé selon la présente invention (Figure 3) comprend au moins un vase d'expansion (5), un réservoir thermostaté (6), un ou plusieurs débitmètres (7, 13), une cellule de mesure de conductivité (8), une électrode de mesure du pH (9), un indicateur de pression amont (10), la cartouche selon la présente invention (1), un indicateur de pression aval (11), une pompe (12), un réservoir d'introduction de la solution (14) et un système d'introduction d'azote sous pression (15). La cartouche (1) comprend une électrode de référence (16), une électrode auxiliaire (4), un ou plusieurs collecteurs de courant (3) pour l'électrode de travail (2) et une sonde de température (17). L'électrode de travail constituée d'un tissu de carbone activé (2) est fixée aux collecteurs de courant (3), mais n'apparaît pas sur la figure.

Les tissus activés chimiquement, pour lesquels un chauffage des précurseurs cellulosiques est effectué en présence d'acide phosphorique concentré, peuvent être utilisés dans le procédé selon la présente invention, mais il est difficile de les débarrasser totalement de l'acide phosphorique ayant servi à leur préparation.

Les tissus activés physiquement, traités à l'acide nitrique concentré puis lavés sous polarisation anodique pendant au moins 5 jours dans un circuit d'électrosorption d'ions métalliques sur carbone activé, conduisent à des tissus très propres, capables d'adsorber pratiquement tous les ions métalliques en solution et de les désorber totalement.

Enfin, la présente invention a pour objet l'utilisation d'une cartouche (1) selon la présente invention telle que définie ci-dessus pour la régulation de la concentration d'ions lithium dans le fluide primaire d'une centrale nucléaire par électrosorption sur carbone activé.

La cartouche selon la présente invention peut ainsi traiter des volumes importants d'eau, de l'ordre de 30m$^3$ ou plus. Le débit de flux de solution qui circule dans la cartouche selon la présente invention peut ainsi être adapté en fonction du volume de solution à traiter.

Avantageusement selon la présente invention, la cartouche est utilisée pour contrôler le pH de l'eau du circuit primaire d'un réacteur nucléaire à eau pressurisée.

Les exemples suivants sont donnés à titre non limitatif et illustrent la présente invention.

Exemple de réalisation de l'invention :

Un tissu de carbone activé, de masse égale à 32,3 g, a été obtenu après activation physique par pyrolyse d'un précurseur cellulosique sous atmosphère neutre à 900°C puis soumis à un courant de dioxyde de carbone à 900°C. Le tissu de carbone activé est ensuite oxydé à l'acide nitrique 69% pendant 3 heures à 80°C, puis lavé au Soxhlet pendant 3 jours (l'eau est changée 3 fois).

Le tissu est alors utilisé dans le circuit d'électrosorption d'ions métalliques sur carbone activé (Figure 3) dans lequel on fait circuler une solution aqueuse d'hydroxyde de lithium contenant 1000 ppm de bore et 6,1 ppm de lithium afin de se rapprocher des conditions du milieu nucléaire, le volume de solution étant de 12 litres. La solution est désoxygénée par barbotage gazeux dans le réservoir de préparation avant d'être transférée dans le circuit. Le tissu est alors utilisé en tant qu'électrode de travail d'une cartouche pour le piégeage d'ions. Le tissu est en contact avec trois collecteurs de courant en graphite. La contre-électrode est un cylindre en graphite creux à l'intérieur duquel passe la solution aqueuse. Le tissu est plié sur lui-même et occupe un tiers de la surface du cylindre. Tous les éléments du circuit en contact avec la solution sont en élastomère afin d'éviter toute pollution par les métaux.

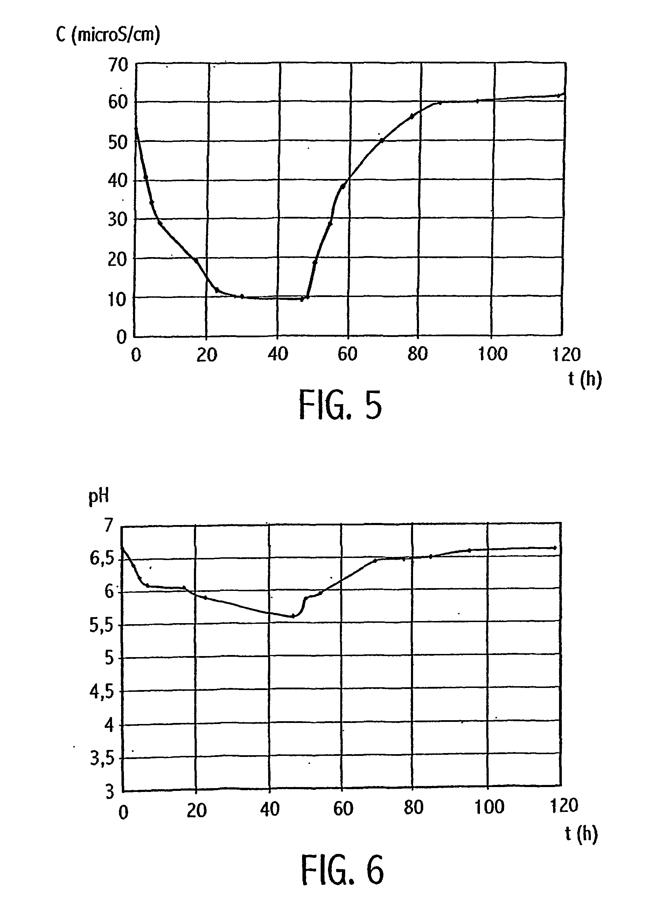

A la fin de la première adsorption, le tissu donne un pH de 4,3 qui indique qu'il reste de l'acide nitrique en solution (une solution d'acide borique à 1000 ppm en B donnerait un pH de 5,9). Un lavage sous polarisation anodique dans le circuit pendant 10 jours, à un débit de 100 l/h, conduit à un tissu très propre, capable d'adsorber pratiquement tous les ions $Li^+$ présents en solution et de les désorber totalement (Figure 4). La conductivité électrique et le pH de la solution suivent la même évolution que la concentration de $Li^+$ en solution (Figures 5 et 6). L'évolution de la conductivité électrique (exprimée en microSiemens/cm) et du pH de la solution constituent ainsi des indicateurs de l'efficacité de l'électrosorption. L'évolution de la conductivité électrique de la solution comme l'évolution du pH de la solution permettent également d'appréhender une pollution éventuelle de la solution.

**Revendications**

1. Cartouche cylindrique (1) pour le piégeage d'ions métalliques en solution aqueuse comprenant une électrode en tissu de carbone activé (2) fixée à au moins un collecteur de courant (3), une contre-électrode (4), une entrée et une sortie de la solution aqueuse à traiter, **caractérisée en ce que** le tissu (2) est disposé de telle manière que la solution se déplace tangentiellement à la surface du tissu sans le traverser pour assurer le piégeage des ions métalliques.

2. Cartouche pour le piégeage d'ions selon la revendication 1, **caractérisée en ce que** la contre-électrode (4) est constituée d'un cylindre creux à l'intérieur duquel passe une solution aqueuse.

3. Cartouche pour le piégeage d'ions selon la revendication 1 ou 2, **caractérisée en ce que** le tissu de carbone activé (2) et la contre-électrode (4) sont cylindriques et concentriques.

4. Cartouche pour le piégeage d'ions selon l'une quelconque des revendications précédentes, **caractérisée en ce que** le tissu (2) occupe une partie de la surface du cylindre, de préférence environ un tiers de la surface du cylindre.

5. Procédé de régulation de la concentration d'ions métalliques, en particulier d'élimination de traces de métaux lourds, dans un circuit d'eau par électrosorption sur carbone activé, **caractérisé en ce qu'**on fait circuler le fluide tangentiellement à la surface d'un filtre comprenant un tissu de carbone activé soumis à une polarisation contrôlée.

6. Procédé selon la revendication 5, **caractérisé en ce qu'**on diminue la concentration de cations métalliques en polarisant négativement le tissu de carbone activé.

7. Procédé selon la revendication 5, **caractérisé en ce qu'**on augmente la concentration de cations métalliques en polarisant positivement le tissu de carbone activé.

8. Procédé selon l'une quelconque des revendications 5 à 7, **caractérisé en ce que** les ions métalliques sont choisis dans le groupe constitué par les alcalins, les alcalino-terreux, les métaux de transition, les lanthanides, les actinides et les métaux lourds.

9. Procédé selon la revendication 8, **caractérisé en ce que** l'ion métallique est le lithium.

10. Procédé selon l'une quelconque des revendications 5 à 9, **caractérisé en ce que** le filtre comprenant un tissu de carbone activé est constitué par la cartouche (1) telle que définie dans l'une quelconque des revendications 1 à 4.

11. Procédé selon l'une quelconque des revendications 5 à 10, **caractérisé en ce que** le tissu de carbone activé est activé physiquement ou chimiquement, traité à l'aide d'un oxydant, puis lavé.

12. Procédé selon la revendication 11, **caractérisé en ce que** le tissu de carbone est activé physiquement, traité à l'acide nitrique concentré pendant une durée comprise entre deux et quatre heures à une température d'au moins 80°C, puis lavé sous polarisation anodique pendant au moins 5 jours dans un circuit d'électrosorption d'ions métalliques sur carbone activé, ledit circuit étant un circuit fermé et comprenant une cartouche telle que définie dans l'une quelconque des revendications 1 à 4.

13. Utilisation d'une cartouche (1) telle que définie dans l'une quelconque des revendications 1 à 4 pour la régulation de la concentration d'ions lithium dans le fluide primaire d'une centrale nucléaire par électrosorption sur carbone activé.

14. Utilisation selon la revendication 13 pour contrôler le pH de l'eau du circuit primaire d'un réacteur nucléaire à eau pressurisée.

**Claims**

1. A cylindrical cartridge (1) for trapping metal ions in an aqueous solution comprising an electrode in activated carbon fabric (2) attached to at least one current collector (3), a counter-electrode (4), an inlet and an outlet for the aqueous solution to be treated, **characterized in that** the fabric (2) is positioned in such a way that the solution moves tangentially to the surface of the fabric without crossing it in order to provide trapping of the metal ions.

2. The ion-trapping cartridge according to claim 1, **characterized in that** the counter-electrode (4) consists of a hollow cylinder inside which an aqueous solution passes.

3. The ion-trapping cartridge according to claim 1 or 2, **characterized in that** the activated carbon fabric (2) and the counter-electrode (4) are cylindrical and concentric.

4. The ion-trapping cartridge according to any of the preceding claims, **characterized in that** the fabric (2) occupies a portion of the surface of the cylinder, preferably about one third of the surface of the cylinder.

5. A method for regulating the concentration of metal ions, in particular for removing traces of heavy metals, in a water circuit by electrosorption on activated carbon, **characterized in that** the fluid is caused to flow tangentially to the surface of a filter comprising an activated carbon fabric subject to controlled polarization.

6. The method according to claim 5, **characterized in that** the concentration of metal cations is reduced by negatively polarizing the activated carbon fabric.

7. The method according to claim 5, **characterized in that** the concentration of metal cations is increased by positively polarizing the activated carbon fabric.

8. The method according to any of claims 5 to 7, **characterized in that** the metal ions are selected from the group formed by alkaline metals, earth alkaline metals, transition metals, lanthanides, actinides and heavy metals.

9. The method according to claim 8, **characterized in that** the metal ion is lithium.

10. The method according to any of claims 5 to 9, **characterized in that** the filter comprising an activated carbon fabric is formed by the cartridge (1) as defined in any of claims 1 to 4.

11. The method according to any of claims 5 to 10, **characterized in that** the activated carbon fabric is physically or chemically activated, treated by an oxidant, and then washed.

**12.** The method according to claim 11, **characterized in that** the carbon fabric is physically activated, treated with concentrated nitric acid for a duration comprised between two and four hours at a temperature of at least 80°C, and then washed under anodic polarization for at least five days in a circuit for electrosorption of metal ions on activated carbon, said circuit being a closed circuit and comprising a cartridge as defined in any of claims 1 to 4.

**13.** The use of a cartridge (1) as defined in any of claims 1 to 4 for controlling the concentration of lithium ions in the primary fluid of a nuclear power plant by electrosorption on activated carbon.

**14.** The use according to claim 13, for controlling the pH of the water of the primary circuit of a pressurized water nuclear reactor.

**Patentansprüche**

**1.** Zylindrische Kartusche (1) zum Einfangen von Metallionen in wässriger Lösung, eine Elektrode aus Aktivkohlestoff (2) umfassend, die an mindestens einem Stromkollektor (3) befestigt ist, eine Gegenelektrode (4), einen Eingang und einen Ausgang für die zu behandelnde wässrige Lösung, **dadurch gekennzeichnet, dass** der Stoff (2) derart angeordnet ist, dass sich die Lösung tangential auf der Oberfläche des Stoffs bewegt, ohne ihn zu durchqueren, um das Einfangen der Metallionen zu gewährleisten.

**2.** Kartusche zum Einfangen von Ionen nach Anspruch 1, **dadurch gekennzeichnet, dass** die Gegenelektrode (4) von einem Hohlzylinder gebildet wird, in dessen Innerem eine wässrige Lösung fließt.

**3.** Kartusche zum Einfangen von Ionen nach Anspruch 1 oder 2, **dadurch gekennzeichnet, dass** der Aktivkohlestoff (2) und die Gegenelektrode (4) zylindrisch und konzentrisch sind.

**4.** Kartusche zum Einfangen von Ionen nach einem der vorangehenden Ansprüche, **dadurch gekennzeichnet, dass** der Stoff (2) einen Abschnitt der Oberfläche des Zylinders belegt, vorzugsweise ein Drittel der Zylinderoberfläche.

**5.** Verfahren zum Regulieren der Konzentration von Metallionen, vor allem zum Beseitigen von Spuren von Schwermetallen, in einem Wasserkreislauf durch Elektrosorption auf Aktivkohle, **dadurch gekennzeichnet, dass** das Fluid veranlasst wird, tangential auf der Oberfläche eines Filters zu zirkulieren, der einen einer kontrollierten Polarisierung unterworfenen Aktivkohlestoff umfasst.

**6.** Verfahren nach Anspruch 5, **dadurch gekennzeichnet, dass** die Konzentration der Metallkationen durch negative Polarisierung des Aktivkohlestoffs verringert wird.

**7.** Verfahren nach Anspruch 5, **dadurch gekennzeichnet, dass** die Konzentration der Metallkationen durch positive Polarisierung des Aktivkohlestoffs verringert wird.

**8.** Verfahren nach einem der Ansprüche 5 bis 7, **dadurch gekennzeichnet, dass** die Metallionen aus der Gruppe ausgewählt sind, die von den Alkali, den Erdalkali, den Transitionsmetallen, den Lanthaniden, den Aktiniden und den Schwermetallen gebildet wird.

**9.** Verfahren nach Anspruch 8, **dadurch gekennzeichnet, dass** das Metallion das Lithium ist.

**10.** Verfahren nach einem der Ansprüche 5 bis 9, **dadurch gekennzeichnet, dass** der Filter, der einen Aktivkohlestoff umfasst, von der Kartusche (1) gebildet wird, wie in einem der Ansprüche 1 bis 4 definiert.

**11.** Verfahren nach einem der Ansprüche 5 bis 10, **dadurch gekennzeichnet, dass** der Aktivkohlestoff physikalisch oder chemisch aktiviert, mit Hilfe eines Oxidans behandelt, danach gewaschen wird.

**12.** Verfahren nach Anspruch 11, **dadurch gekennzeichnet, dass** der Kohlestoff physikalisch aktiviert wird, mit Hilfe konzentrierter Salpetersäure während einer Zeitdauer zwischen zwei und vier Stunden inklusive bei einer Temperatur von mindestens 80 °C behandelt, danach unter anodischer Polarisierung mindestens 5 Tage lang in einem Elektrosorptionskreislauf von Metallionen auf Aktivkohle gewaschen wird, wobei der Kreislauf ein geschlossener Kreislauf ist und eine Kartusche umfasst, wie in einem der Ansprüche 1 bis 4 definiert.

13. Verwendung einer Kartusche (1), wie in einem der Ansprüche 1 bis 4 definiert, zum Regeln der Konzentration von Lithiumionen im Primärfluid eines Kernkraftwerks durch Elektrosorption auf Aktivkohle.

14. Verwendung nach Anspruch 13 zum Kontrollieren des pH des Wassers des Primärkreislaufs eines Druckwasser-Kernreaktors.

FIG.1

FIG.2

[Li+](ppm)

−4,5V

+5 à +8V

t(h)

FIG.4

FIG. 3

C (microS/cm)

FIG. 5

pH

FIG. 6

## RÉFÉRENCES CITÉES DANS LA DESCRIPTION

**Littérature non-brevet citée dans la description**

- **FERRO-GARCIA M. A.** *Carbon,* 1990, vol. 28, 545
- **JAYSON G. G.** *Carbon,* 1987, vol. 25, 523
- **DOBROWOLSKI R.** *Carbon,* 1986, vol. 24, 15
- **ARSALA KAHN M.** *Carbon,* 1992, vol. 30, 957
- **LALVANI S. B.** *Carbon,* 1998, vol. 36, 1219
- **CARROTT P. J. M.** *Carbon,* 1997, vol. 35, 403
- **RIVERA-UTRILLA.** *Carbon,* 1987, vol. 25, 645
- **LAKOV L.** *Carbon,* 1999, vol. 37, 1657
- **HAGHSERESHT F.** *Carbon,* 1999, vol. 37, 1491
- **G. G. JAYSON.** *CARBON*
- **S. EVANS.** *J. Electrochem. Soc.,* 1966, vol. 113, 1314